# EUROPÄISCHE PATENTSCHRIFT

(11) **EP 1 281 558 B1**
(45) Veröffentlichungstag und Bekanntmachung des Hinweises auf die Patenterteilung: **02.03.2011**
(21) Anmeldenummer: 02012249.5
(22) Anmeldetag: 04.06.2002
(51) Int. Cl.: B60K 15/05, B60K 15/04

(54) **Tankklappenanordnung für einen Kraftwagen**
Fuel door assembly for a motor vehicle
Agencement de volet d'occultation du bouchon de remplissage de véhicule automobile

(30) Priorität: 30.07.2001 DE 10137035
(43) Veröffentlichungstag der Anmeldung: 05.02.2003
(73) Patentinhaber: ITW Automotive Products GmbH & Co. KG, 58642 Iserlohn (DE)
(72) Erfinder: Jörg, Roland, 72108 Rottenburg (DE); Korn, Bernd, 71263 Weil der Stadt (DE); Seefried, Johann, 72184 Eutingen (DE)
(74) Vertreter: Hauck Patent- und Rechtsanwälte

(56) Entgegenhaltungen:
- EP-A- 0 887 218
- DE-A- 19 711 331
- DE-A- 19 827 194
- FR-A- 2 731 391
- US-A- 2 469 283

## Beschreibung

Die Erfindung betrifft eine Tankklappenanordnung für einen Kraftwagen nach dem Oberbegriff des Patentanspruchs 1.

Der EP 0 846 585 A2 ist bereits eine solche Tankklappenanordnung mit einer schwenkbar gelagerten Tankklappe als bekannt zu entnehmen. Die Tankklappe ist mittels einer Verriegelungseinrichtung in ihrer geschlossenen Stellung gehalten. Dabei umfasst die Verriegelungseinrichtung der Tankklappe eine sog. Push-Push-Verriegelung. Aus FR-A-2731391 und DE-A-19711331 ist eine Tankklappenanordnung bekannt, bei der nach dem Lösen einer Verriegelung eine Feder die Klappe in die Öffnungsstellung bringt. Es ist ferner bekannt, eine Push-Push-Verriegelung vorzusehen, die mit einem Stößelelement an der Tankklappe zusammenwirkt.

Der Erfindung liegt die Aufgabe zugrunde, eine Tankklappenanordnung für einen Kraftwagen der eingangs genannten Art zu schaffen, deren Push-Push-Verriegelung bei ruckartigen Beschleunigungskräften nicht öffnet.

Die erfindungsgemäße Lösung dieser Aufgabe ergibt sich aus den Merkmalen des Hauptanspruchs. Vorteilhafte Ausgestaltungen der Erfindung sind den üblichen Ansprüchen zu entnehmen.

Bei der erfindungsgemäßen Tankklappenanordnung ist die Push-Push-Verriegelung unter dem Einfluss von ruckartigen Beschleunigungskräften auf die Tankklappe nicht aktivierbar, so dass sie verriegelt festgehalten ist. Zu diesem Zweck kann ein Massenausgleichsteil auf dem mittleren Abschnitt einer Z-Feder der Push-Push-Verriegelung verschiebbar und seinerseits von einer weiteren Feder gehalten sein. In der Ruhestellung liegt das Massenausgleichsteil einer Öffnung gegenüber, in die es eintaucht, wenn die Z-Feder verschwenkt wird. Bei einer Beschleunigung verschiebt sich das Massenausgleichsteil und verhindert eine Verschwenkung der Z-Feder. Die Tankklappe kann dann nicht geöffnet werden.

Weitere Einzelheiten der Erfindung ergeben sich aus der nachfolgenden Beschreibung eines bevorzugten Ausführungsbeispiels anhand der Zeichnungen; diese zeigen in

Als besonders komfortabel hat es sich erwiesen, die Öffnungsbewegung der Tankklappe durch ein Dämpfungsglied zu vergleichmäßigen. Die Öffnungsbewegung kann dabei durch einen Federspeicher erfolgen, der auf einfache und zuverlässige Art beim Zuklappen der Tankklappe regenerierbar ist.

Bei der direkten Betätigung der Tankklappe zum Öffnen derselben hat sich eine Push-Push-Verriegelung der Verriegelungseinrichtung als besonders hochwertig erwiesen. Dabei kann ein zusätzliches Verschließen der Tankklappe über die Zentralverriegelung des Kraftwagens durch ein Stößelelement erfolgen, welches durch ein zusätzliches mechanisches Sicherungsmittel axial festgelegt ist.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in
- Fig.1a bis 1c: eine Perspektivansicht, eine Draufsicht und eine Schnittansicht entlang der Linie Ic - Ic in Fig. 1a auf ein vormontierbares Einbaumodul der Tankklappenanordnung nach der Erfindung, das die Tankklappe, deren Schwenklagerung samt Antriebsvorrichtung sowie die Verriegelungseinrichtung umfasst;
- Fig.2: eine Perspektivansicht auf ein Gehäuse des vormontierbaren Einbaumoduls der Tankklappenanordnung, wobei die Tankklappe weggelassen ist;
- Fig.3a und 3b: eine Perspektivansicht und eine Seitenansicht auf die Tankklappe, von der ein Stößelelement absteht;
- Fig.4: eine Perspektivansicht auf die Verriegelungseinrichtung, in welche das Stößelelement beim Verriegelungsvorgang eintaucht;
- Fig.5a und 5b: eine Vorderansicht und eine Seitenansicht auf die Verriegelungseinrichtung nach Fig.4;
- Fig.6a bis 6d: Schnittansichten durch die Verriegelungseinrichtung der Linien VIa - VIa, VIb - VIb, VIc - VIc und VId - VId in Fig.5b; und in
- Fig.7: eine Schnittansicht durch die Verriegelungseinrichtung der Linien VII - VII in Fig.5a.

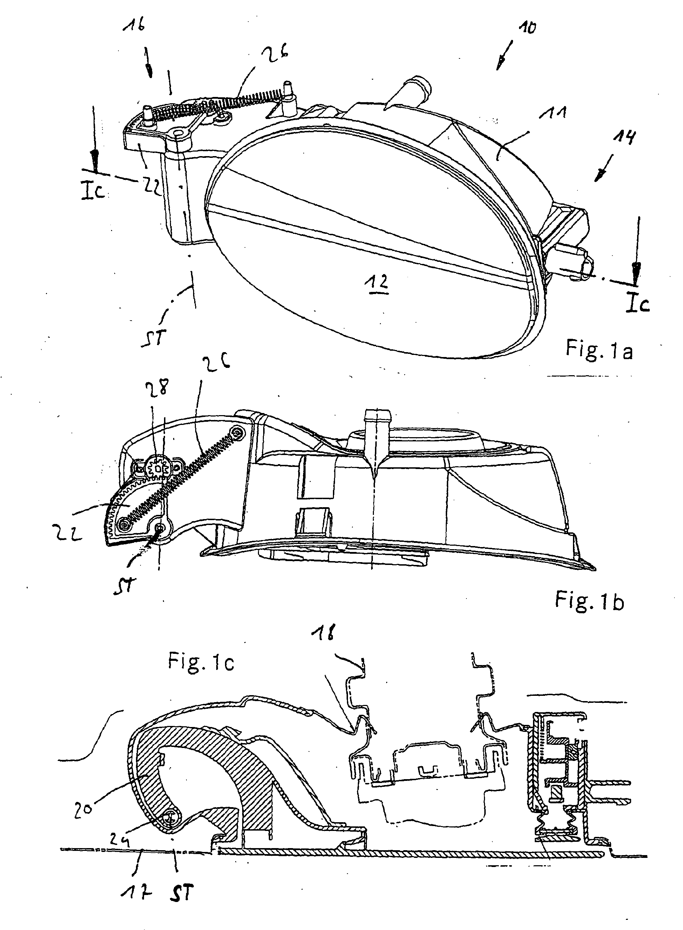

In den Figuren 1a bis 1c ist in Perspektivansicht, in Draufsicht und in Schnittansicht entlang der Linie Ic - Ic in Fig. 1a ein bei der Tankklappenanordnung vormontierbares Einbaumodul 10 dargestellt. Das Einbaumodul 10 umfasst im wesentlichen ein Gehäuse 11, eine Tankklappe 12, eine Verriegelungseinrichtung 14 zum Festlegen der Tankklappe 12 in ihrer geschlossenen Stellung, sowie eine Antriebsvorrichtung 16 zum selbsttätigen Überführen der Tankklappe 12 aus der geschlossenen Stellung in eine Betankungsstellung. Wie insbesondere in Fig.1c erkennbar, ist das Einbaumodul 10 flächenbündig in eine Öffnung der Karosserieteile 17 des Kraftwagens einsetzbar und beispielsweise mit einem zum Tank hinführenden Rohr 18 verbindbar. Die Tankklappe 12 ist um eine in Fahrzeughochrichtung verlaufende Schwenkachse ST über einen Arm 20 an dem Gehäuse 11 angelagert. Die Ablage der Tankklappe 12 erfolgt auf einer Halterung an der fahrzeuginneren Seite des Haltearms. Dabei kann die Tankklappe 12 über Pufferelemente gegenüber dem Gehäuse 11 abgestützt sein. Nach dem Lösen einer im weiteren noch beschriebenen Verriegelungseinrichtung 14 ist die Tankklappe 12 mittels Zahnradelementes 22 der Antriebsvorrichtung 16 selbsttätig öffenbar, wobei das Zahnradelement 22 drehfest mit der Lagerachse 24 der Tankklappe 12 verbundenen ist. Das Zahnradelement 22 ist hierzu durch einen Federspeicher in Form einer Schraubenzugfeder 26 in Öffnungsdrehrichtung federbelastet, die beim Zuklappen der Tankklappe regenerierbar ist. Die Öffnungsbewegung der Tankklappe 12 ist dabei durch ein Dämpfungsglied im Form eines drehgedämpften Ritzel 28 vergleichmässigt, welches in der Verzahnung des Zahnradelementes 22 kämmt. Die Verriegelungseinrichtung 14 ist auf der zur Schwenkachse ST entgegengesetzten Seite der Tankklappe 12 angeordnet, um eine besonders funktionssichere Verriegelung zu erreichen.

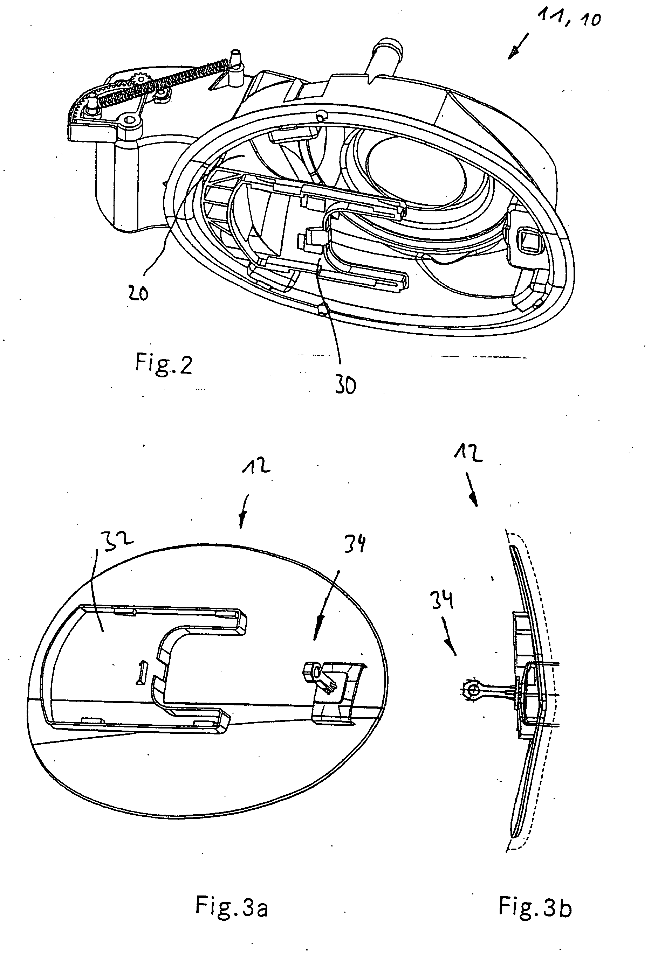

In Fig.2 ist in Perspektivansicht das Gehäuse 11 des vormontierbaren Einbaumoduls 10 der Tankklappenanordnung ohne die Tankklappe 12 dargestellt, wobei insbesondere ein großformatiger Armabschnitt 30 des Arms 20 (Fig.1c erkennbar ist, an welchem die Tankklappe 12 beispielsweise durch eine Rastverbindung zu befestigen ist. Das Gehäuse 11 selbst ist ebenfalls mittels einer Rastverbindung oder dgl. an der Wagenkarosserie befestigbar.

Die Figuren 3a und 3b zeigen eine Perspektivansicht und eine Seitenansicht auf die Tankklappe 12 mit einem Gegenstück 32 zum Verbinden der Klappe 12 mit dem Armabschnitt 30 des Arms 20 sowie ein Stößelelement 34, welches von der Rückseite der Tankklappe 12 absteht und mit der korrespondierenden Verriegelungseinrichtung 14 auf im weiteren noch erläuterte Weise zusammenwirkt. Das Stößelelement 34 ist von einer Durchgangsbohrung 36 durchsetzt, in welche ein mechanischer Verschlußzapfen bei in die Verriegelungseinrichtung 14 eingetauchter Verriegelungsstellung des Stößelelements 34 dieses zusätzlich axial festlegt. Um einen Eintritt von Wasser oder Schmutz in die Verriegelungseinrichtung 14 zu vermeiden, kann das Stößelelement 34 außenseitig mit einer Tülle oder dgl. Dichtung versehen sein.

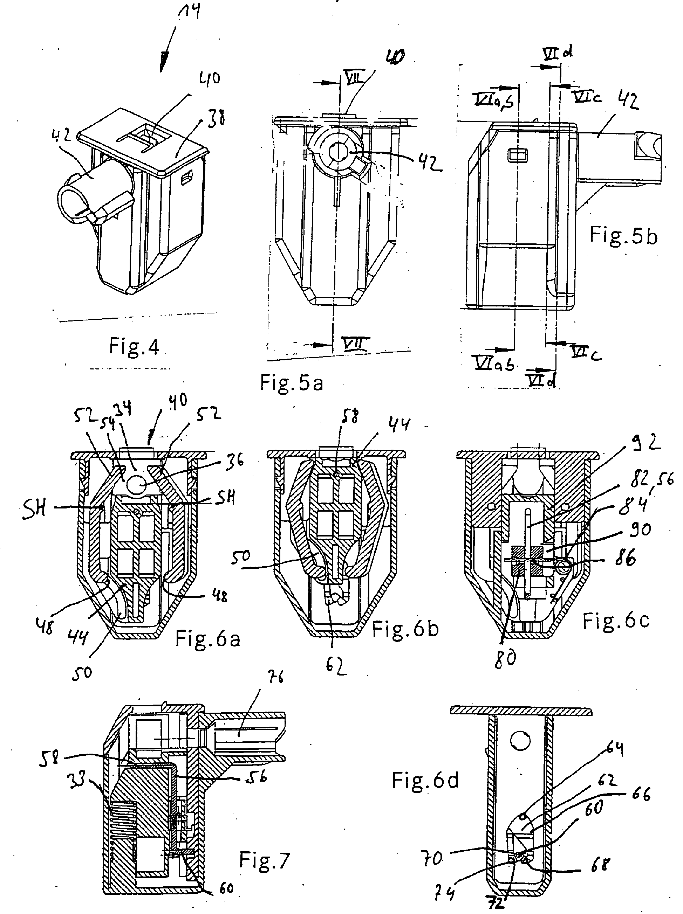

Die Figuren 4, 5a und 5b zeigen in Perspektivansicht, in Vorderansicht und in Seitenansicht die Verriegelungseinrichtung 14, welche an dem Gehäuse 11 befestigt ist. Oben am Verschlussgehäuse 38 der Verriegelungseinrichtung 14 ist eine Eintauchöffnung 40 erkennbar, durch welche das Stößelelement 34 der Tankklappe 12 beim Verriegelungsvorgang in das Verschlussgehäuse 38 eintaucht. Um einen Eintritt von Wasser oder Schmutz in die Verriegelungseinrichtung 14 zu vermeiden, ist die Eintauchöffnung 40 von einer Dichtung 41 begrenzt, welche die Verriegelungseinrichtung 14 gegen das Stößelelement 34 abdichtet. Weiter ist ein Aufnahmeflansch 42 erkennbar, über welchen der durch die Zentralverriegelung des Kraftwagens betätigbare mechanischer Verschlußzapfen das Verschlussgehäuse 38 durchsetzt.

In den Figuren 6a bis 6d sind Schnittansichten durch das Verschlussgehäuse 38 der Verriegelungseinrichtung 14 entlang der Linien VIa - VIa, VIb - VIb, VIc - VIc und VId - VId in Fig.5b dargestellt. Fig.6a zeigt dabei das Verschlussgehäuse 38 mit über die Öffnung 40 darin eingetauchtem und festgelegtem Stößelelement 34; Fig. 6b zeigt den selben Schnitt ohne das eingetauchte und festgelegte Stößelelement 34. Beim Einschieben des Stößelementes 34 wird ein Steuerschlitten 44 mittels des Stößelementes 34 aus der in Fig.6b gezeigten gegen die Federkraft der Feder 33 in die in Fig.6a gezeigten Stellung verschoben. Seitlich des Steuerschlittens 44 sind innerhalb des Verschlussgehäuses 38 zwei Haltearme 46 um die jeweiligen Achsen SH verschwenkbar an dem Verschlussgehäuse 38 angelagert. Auf ihrem dem Stößelelement 34 abgewandten Ende umfassen die Haltearme 46 in den Figuren 6a und 6b aus der Zeichnungsebene nach unten zeigend Kulissenarme 48, welche mit Kulissen 50 in dem verschiebbaren Schlitten 44 zusammenwirken. Beim Verschieben des Schlittens 44 beim Einstecken des Stößelementes 34 durchlaufen die Kulissenarme 48 die zugehörige Kulisse 50, wodurch die Haltearme 46 um die jeweilige Achse SH verschwenkt werden. Beim Einstecken des Stößelementes 34 werden die Haltearme 46 derart verschwenkt, dass vordere Armenden 52 der Haltearme 46 den Stößelkopf 54 des Stößelementes 34 formschlüssig hintergreifen und diesen in der geschlossenen Stellung der Tankklappe 12 halten. Zur Verwirklichung der Push-Push-Verriegelung ist eine in Zusammenschau mit Fig.7 ersichtliche Z-förmige Feder 56 vorgesehen, welche mit einem abgebogenen Federschenkel 58 schwenkbar an dem Schlitten 44 gelagert ist. Der weitere Federschenkel 60 auf der anderen Seite der Feder 56 ist innerhalb einer weiteren Kulisse 62 geführt, welche in den Figuren 6b und 6d ersichtlich ist. Ist der Schlitten 44 in der Stellung, in der das Stößelelement 34 - gemäß Fig.6b - nicht eingeschoben ist, so befindet sich der Federschenkel 60 in der in Fig.6d mit dem Bezugszeichen 64 angedeuteten Stellung. Beim Einschieben des Stößelelements 34 wandert der Federschenkel 60 entlang der Kulissenflanke 66 bis zu einer Stelle 68, in welcher der Schlitten 44 mittels des Stößelelements 34 seine vollständig eingeschobene Stellung erreicht hat. Wird die Tankklappe 12 nach der Verschließen nun losgelassen, so wandert der Federschenkel 60 in die Position 70, in welcher der Tankdeckel 12 verriegelt festgehalten ist. Beim Öffnen des Tankdeckels 12 wird der Tankdeckel 12 und auch der Schlitten 44 aufgrund der Push-Push-Verriegelung leicht in Richtung Fahrzeugmitte gedrückt; für den Federschenkel 60 bedeutet dies, dass dieser gegen die Kulissenflanke 72 gedrückt und in Richtung der Position 74 bewegt wird. Aus dieser Position 74 kann sich der Federschenkel 60 - und somit auch der Schlitten 44 - frei in Richtung der Ausgangsposition 64 bewegen, und das Stößelelement 34 ist zum Aufschwenken wieder freigegeben. Zur Zurückbewegung des Schlittens 44 dient die in dieser Stellung vorgespannte Feder 33.

In der in Fig.6a gezeigten Stellung ist in die Öffnung 36 des Stößelelements 34 der nicht gezeigte Verschlußzapfen einführbar, welcher seinerseits über die Öffnung 76 (Fig.7) in dem Flansch 42 in das Gehäuse 38 geführt ist. Der Verschlußzapfen wird hier über die Zentralverriegelung betätigt. Die Haltearme 46 können aus einem derart nachgiebigen Kunststoff gestaltet sein, dass bei einem Versagen der Push-Push-Verriegelung der durch die Armenden 52 hintergriffene Stößelkopf 54 mit erhöhter Auszugskraft an der Tankklappe 12 unter Aufspreizung der beiden Armenden 52 aus deren Hintergriff lösen und die Tankklappe 12 öffnen lässt. Bei einer solchen Notentriegelung werden die Haltearme 46 nicht zerstört. Ist der mechanische Verschlußzapfen mit der Durchgangsbohrung 36 in Eingriff, so muss dieser vor der Notentriegelung geöffnet werden, beispielsweise durch eine Notbetätigung vom Heckstauraum des Kraftwagens aus.

Um ein Öffnen der Push-Push-Verriegelung dass die Push-Push-Verriegelung unter dem Einfluss von ruckartigen Beschleunigungskräften zu vermeiden, ist ein Massenausgleichsteil 80 (Fig.6c) vorgesehen. Solche ruckartigen Beschleunigungskräfte auf die Tankklappe 12 können beispielsweise bei der Fahrt entstehen oder durch Waschbürsten einer Waschanlage. Das Massenausgleichsteil 80 ist mittels einer Durchgangsöffnung auf den mittleren Schenkelabschnitt 82 der Z-förmigen Feder 56 aufgesteckt und durch eine weitere Feder 84 gehalten. Hierzu durchsetzt ein Federschenkel 86 der Feder 84 eine weitere Durchgangsöffnung in dem Massenausgleichsteil 80. Durch die Feder 84 ist das Massenausgleichsteil 80 in einer derartigen Stellung relativ zur Z-Feder 56 gehalten, dass das Massenausgleichsteil 80 auf Höhe einer Öffnung 90 einer seitlich davon angeordneten Wandung 92 zu liegen kommt. In dieser Ruhestellung kann somit die Z-Feder 56 um ihren Schenkel 58 verschwenkt werden, indem das Massenausgleichsteil 80 in die Öffnung 90 eintaucht. Wird nun aufgrund von ruckartigen Beschleunigungskräften das Massenausgleichsteil 80 ausgelenkt, so bewegt sich diesen entlang des Schenkelabschnittes 82 der Z-förmigen Feder 56, wobei durch diese Bewegung das Massenausgleichsteil 80 eine andere Lage relativ zur Öffnung 90 erfährt. Da das Massenausgleichsteil 80 folglich nicht in die Öffnung 90 eintauchen kann, kann auch die Z-förmigen Feder 56 nicht um ihren Schenkel 58 verschwenkt werden. Ein ungewolltes Verschwenken der Feder 56 aufgrund der ruckartigen Beschleunigungskräfte - mit einer dadurch unbeabsichtigten Freigabe des Stößelkopfes 54 - ist somit verunmöglicht.

## Patentansprüche

1. Tankklappenanordnung für einen Kraftwagen mit einer schwenkbar gelagerten Tankklappe (12), die mittels einer Verriegelungsseinrichtung (14) in ihrer geschlossenen Stellung gehalten ist, wobei der Tankklappe (12) eine Antriebsvorrichtung (16) zugeordnet ist, durch welche die Tankklappe (12) nach dem Lösen der Verriegelungseinrichtung (14) selbsttätig in ihre Betankungsstellung aufklappt, die Verriegelungseinrichtung (14) auf der zur Schwenkachse (ST) entgegengesetzten Seite der Tankklappe (12) angeordnet ist, vor der Rückseite der Tankklappe (12) ein Stößelelement (34) absteht, das mit der korrespondierenden Verriegelungseinrichtung (14) zusammenwirkt und die Verriegelungseinrichtung (14) als Push-Push-Verriegelung ausgebildet ist, wobei das Stößelelement (34) beim Verriegelungsvorgang in ein Verschlussgehäuse (38) der Push-Push-Verriegelung eintaucht, **dadurch gekennzeichnet, dass** die Push-Push-Verriegelung unter dem Einfluss von ruckartigen Beschleunigungskräften auf die Tankklappe (12) deaktiviert ist, so dass sie verriegelt festgehalten ist.

2. Tankklappenanordnung nach Anspruch 1, **dadurch gekennzeichnet, dass** die Öffnungsbewegung der Tankklappe (12) durch ein Dämpfungsglied (28) vergleichmäßigt ist.

3. Tankklappenanordnung nach Anspruch 1, **dadurch gekennzeichnet, dass** die Antriebsvorrichtung (16) einen Federspeicher (26) umfasst, der beim Zuklappen der Tankklappe (12) regenerierbar ist.

4. Tankklappenanordnung nach Anspruch 3, **dadurch gekennzeichnet, dass** als Federspeicher (26) eine Schraubenzugfeder vorgesehen ist, durch welche ein drehfesxt mit einer Lagerachse (24) der Tankklappe (12) verbundenes Zahnradelement (22) im Öffnungsdrehrichtung federbelastet ist, wobei als Dämpfungsglied (28) in der Verzahnung des Zahnradelementes (22) ein drehgedämpftes Ritzel kämmt.

5. Tankklappenanordnung nach Anspruch 1, **dadurch gekennzeichnet, dass** bei der Tankklappenanordnung ein vormontierbares Einbaumodul (10) vorgesehen ist, das die Tankklappe (12), deren Schwenklagerung samt Antriebsvorrichtung (16) sowie die Verriegelungseinrichtung (14) umfasst.

6. Tankklappenanordnung nach Anspruch 1, **dadurch gekennzeichnet, dass** das Stößelelement (34) in seiner eingetauchten Verriegelungsstellung durch ein zusätzliches mechanisches Sicherungsmittel axial festlegbar ist.

7. Tankklappenanordnung nach Anspruch 6, **dadurch gekennzeichnet, dass** das Sicherungsmittel ein Verschlusszapfen einer Zentralverriegelungsanlage ist.

8. Tankklappenanordnung nach Anspruch 1, **dadurch gekennzeichnet, dass** die Push-Push-Verriegelung eine schwenkbar gelagerte Z-Feder (56) aufweist, ein Massenausgleichsteil (80) verschließbar auf dem mittleren Abschnitt (82) der Z-Feder angeordnet ist und mit einem Schenkel (86) einer weiteren Feder verbunden ist, wobei in der Ruhestellung der Federn (54, 84) das Massenausgleichsteil zu einer Öffnung (70) ausgerichtet ist und bei einer Beschleunigungskraft auf die Tankklappe (12) das Massenausgleichsteil (80) auf dem mittleren Federabschnitt (82) verschoben wird und eine Verschwenkung der Z-Feder (56) blockiert.

## Claims

1. Fuel filler flap arrangement for a motor vehicle comprising a pivotably mounted fuel filler flap (12) which is retained in its closed position by a locking device (14), wherein a driving device (16) is assigned to the fuel filler flap (12) by which driving device (16) the fuel fitter flap (12) is automatically swung open into its fuelling position after the locking device (14) is released, the locking device (14) is arranged on the side of the fuel filler flap (12), which is opposite the pivoting axis (ST), a tappet element (34) is protruding from the rear side of the fuel filler flap (12) which interacts with the corresponding locking device (14), and the locking device (14) is designed as a push-push lock, wherein the tappet element (34) is inserted into a fastening housing (38) of the push-push lock during the locking operation, **characterized in that** the push-push lock is deactivated under the influence of sudden acceleration forces on the fuel filler flap (12), so that it is held locked.

2. Fuel filler flap arrangement according to claim 1, **characterized in that** the opening movement of the fuel filler flap (12) is smoothed by a damping element (28).

3. Fuel filler flap arrangement according to claim 1, **characterized in that** the driving device (16) comprises a spring energy store (26) which can be regenerated when the fuel filler flap (12) is swung shut.

4. Fuel filler flap arrangement according to claim 3, **characterized in that** a helical tension spring is provided as the spring energy store (26) which enables a gearwheel element (22), which is connected in a rotationally fixed manner to a bearing spindle (24) of the fuel filler flap (12) to be spring-loaded in an opening direction of rotation, wherein a rotationally damped pinion meshes as a damping element (28) in the toothing of the gearwheel element (22).

5. Fuel filler flap arrangement according to claim 1, **characterized in that** a premountable installation module (10) is provided in the fuel filler flap arrangement, which comprises the fuel filler flap (12), the pivot mounting thereof together with the driving device (16) and the locking device (14).

6. Fuel filler flap arrangement according to claim 1, **characterized in that** the tappet element (34) can be secured axially in its inserted locking position by an additional, mechanical securing means.

7. Fuel filler flap arrangement according to claim 6, **characterized in that** the securing means is a fastening pin of a central locking system.

8. Fuel filler flap arrangement according to claim 1, **characterized in that** the push-push lock comprises a pivotably mounted z-spring (56) and a mass balancing part (80) is lockably mounted on the central portion (82) of the z-spring and connected with a leg (86) of a further spring, wherein in the resting position of the springs (54, 84) the mass balancing part (80) is aligned to an opening (70), and with an acceleration force on the fuel filler flap (12) the mass balancing part (80) is displaced on the central spring part (82) and blocks a pivoting of the z-spring (56).

## Revendications

1. Agencement de volet d'occultation du bouchon de remplissage pour un automobile, avec un volet d'occultation (12) logé de façon pivotante maintenu dans sa position fermée par un dispositif de verrouillage (14), un dispositif d'entraînement (16) étant associé au volet d'occultation (12) par lequel le volet d'occultation (12) s'ouvre automatiquement dans sa position de remplissage après l'ouverture du dispositif de verrouillage (14), le dispositif de verrouillage (14) étant disposé dans le côté du volet d'occultation (12) opposé à l'axe de pivotement (ST), un élément de poussoir (34) projetant de la face arrière du volet d'occultation (12) qui coopère avec le dispositif de verrouillage (14) correspondant et le dispositif de verrouillage (14) étant formé comme un verrouillage « push-push », l'élément de poussoir (34) se plongeant dans un boîtier de fermeture (38) du verrouillage « push-push », **caractérisé en ce que** le verrouillage « push-push » est mis hors fonction sous l'influence de forces d'accélération brusques sur le volet d'occultation (12), de sorte qu'il est retenu dans la condition verrouillée.

2. Agencement de volet d'occultation du bouchon de remplissage selon la revendication 1, **caractérisé en ce que** le mouvement d'ouverture du volet d'occultation (12) est fait uniforme par un élément d'atténuation.

3. Agencement de volet d'occultation du bouchon de remplissage selon la revendication 1, **caractérisé en ce que** le dispositif d'entraînement (16) comporte un cylindre à ressort (26) qui se fait régénérer quand le volet d'occultation (12) est fait fermé.

4. Agencement de volet d'occultation du bouchon de remplissage selon la revendication 3, **caractérisé en ce qu'**un ressort cylindrique de traction est pourvu comme cylindre à ressort (26), par lequel un élément de pignon (22), relié à un axe de logement du volet d'occultation (12) de façon bloquée contre la rotation, est chargé par ressort dans le sens de rotation d'ouverture, un pignon atténué en sa rotation s'engrenant dans la denture de l'élément de pignon (22) comme un atténuateur (28).

5. Agencement de volet d'occultation du bouchon de remplissage selon la revendication 1, **caractérisé en ce que** un module d'installation (10) préassemblable est pourvu dans l'agencement du volet d'occultation, qui comporte le volet d'occultation (10), son logement de pivotement avec le dispositif d'entraînement (16) et aussi le dispositif de verrouillage (14).

6. Agencement de volet d'occultation du bouchon de remplissage selon la revendication 1, **caractérisé en ce que** l'élément de poussoir (34) est axialement déterminable dans sa position de verrouillage plongée par un moyen de sécurisation mécanique additionnel.

7. Agencement de volet d'occultation du bouchon de remplissage selon la revendication 6, **caractérisé en ce que** le moyen de sécurisation est un tenon de verrouillage d'un système de verrouillage central.

8. Agencement de volet d'occultation du bouchon de remplissage selon la revendication 1, **caractérisé en ce que** le verrouillage « push-push » présente un ressort en Z (56) logé de façon pivotante, une pièce d'équilibrage de masses (80) est disposée de façon verrouillable sur la partie centrale (82) du ressort en Z et reliée au tronc (86) d'un autre ressort, dans la position de repos des ressorts (54, 86) la pièce d'équilibrage de masses étant alignée vers une ouverture (70), et la pièce d'équilibrage de masses (80) étant déplacée sur la partie centrale de ressort (82) et empêchant un pivotement du ressort en Z (56) quand une force d'accélération agit sur le volet d'occultation (12).
